Europäisches Patentamt

European Patent Office

Office européen des brevets

(11) Publication number: **0 192 305**
**B1**

(12) **EUROPEAN PATENT SPECIFICATION**

(45) Date of publication of patent specification: **11.07.90**

(51) Int. Cl.⁵: **H 04 L 12/28, H 04 L 12/40**

(21) Application number: **86200231.8**

(22) Date of filing: **18.02.86**

(54) **Arrangement for transmitting digital data.**

(30) Priority: **19.02.85 NL 8500462**

(43) Date of publication of application:
**27.08.86 Bulletin 86/35**

(45) Publication of the grant of the patent:
**11.07.90 Bulletin 90/28**

(84) Designated Contracting States:
**DE FR GB IT NL SE**

(56) References cited:
**DE-A-3 402 577**

**PATENTS ABSTRACTS OF JAPAN, vol. 5, 25th
November 1981, page 115 P 91; & JP - A - 56 114
025**

**IBM TECHNICAL DISCLOSURE BULLETIN, vol.
27, no. 4A, September 1984, page 1991, New
York, US; F. CLOSS et al.: "Ordered access
protocol for communication channels"**

(73) Proprietor: **N.V. Philips' Gloeilampenfabrieken
Groenewoudseweg 1
NL-5621 BA Eindhoven (NL)**

(72) Inventor: **Vanbrabant, Jean-Pierre Clement
Raymond
c/o INT. Octrooibureau B.V. Prof. Holstlaan 6
NL-5656 AA Eindhoven (NL)**

(74) Representative: **De Jongh, Cornelis Dominicus
et al
INTERNATIONAAL OCTROOIBUREAU B.V. Prof.
Holstlaan 6
NL-5656 AA Eindhoven (NL)**

**Description**

The invention relates to an arrangement for transmitting digital data comprising a main station (MS) and a plurality of stations ($S_1$-$S_n$) which together are connected to a common communication path (B), these stations ($S_1$-$S_n$) comprising a data transmitter, a data receiver and addressing means ($A_i$), which addressing means of each station comprise a clock pulse counter (CNTR) for counting the clock pulses transmitted by a clock pulse generator *via* a clock channel ($L_3$) which forms part of the communication path (B), which addressing means further comprise an address register (ADDR) and a comparator arrangement (COMP) for comparing the instantaneous counting position of the clock pulse counter (CNTR) with the content of the address register (ADDR), that in case of the presence of equality between this counting position and this content and of the presence of a communication request in the relevant station a switching signal is generated which signal disables the counting process of the clock pulse counter (CNTR) of each station *via* a SEND-channel ($L_2$) forming part of the communication path (B), the relevant station transmits digital data *via* a data channel ($L_1$) forming part of the communication path (B) to an addressed station and after the data transmission being ended the disabling of the counting process of the clock pulse counters is being cancelled *via* the SEND-channel ($L_2$).

Such an arrangement is disclosed in the patent application DE—A 3 402 577. In that arrangement each station checks whether there is a communication request on a Service Request (SRQ) channel which forms part of the communication path. If this is the case the clock pulse counters of all stations start to count and a station that wishes to transmit data to another station, can put data on the databus as soon as the output of its clock pulse counter corresponds to its address. This station disables the counting process of all the other stations directly via the SEND-channel. Therefore in this arrangement, means are required in each station to send a communication request signal in case a station wishes to transmit. Further there are four conductors between stations necessary for signalling and synchronizing purposes as well as a data bus.

The object of the invention is to provide an arrangement which disables the clock pulse counters of the stations simply, efficiently and reliably, while also the stations are of a more simple construction.

According to the invention, the type of arrangement described in the opening paragraph is characterized in that the main station (MS) comprises a clock pulse generator (CLK) which is disableable by the switching signal on the SEND-channel ($L_2$) and that each station comprises a local clock pulse generator, which local clock pulse generator during the data transport transmits clock pulses to the further stations *via* the clock channel ($L_3$) forming part of the communication part (B), and that each station comprises blocking means (BL) for blocking the counting input of the clock pulse counter (CNTR) for clock pulses transmitted by the transmitting station. The advantage of this invention is that by disabling the clock pulse generator in the main station the counting process of the clock pulse counters of all other stations is blocked very effectively.

It is advantageous that the clock pulse counter of each station has a reset input which is connected to a reset channel forming part of the communication path, that the central station comprises reset means connected to the reset channel for periodically resetting the clock pulse counters.

It is further advantageous when the channels forming part of the communication path are each realized by a physically separate line.

It is advantageous that each station comprises a local clock pulse generator, which local clock pulse generator during data transport transmits clock pulses to the other stations *via* the clock channel forming part of the communication path *and* that each station comprises blocking means for blocking the counting input transmitted by the sending station.

An embodiment of the invention will now be described *in detail* by way of example with reference to the accompanying drawing, in which identical components in the several Figures are given the same reference numerals. Therein:

Figure 1 shows a block circuit diagram of the arrangement according to the invention,

Figure 2 shows a block circuit diagram of a station for use in the arrangement of Figure 1, and

Figure 3 shows a block circuit diagram of a main station for use in the arrangement of Figure 1.

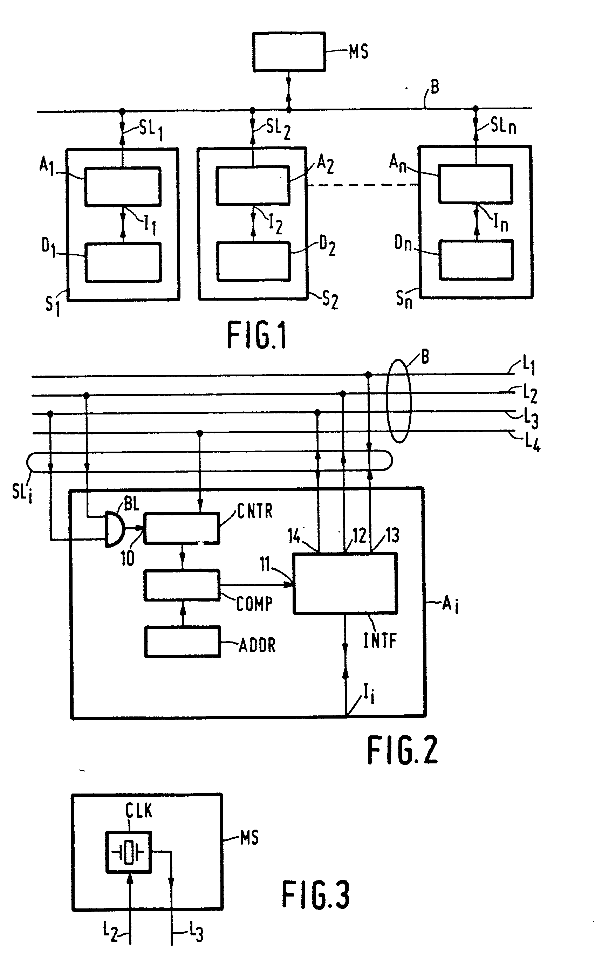

In Figure 1, B denotes a communication path to which a main station MS and a number of stations $S_1$, $S_2$, ... $S_n$ are connected. The *n* stations $S_1$, $S_2$, ... $S_n$ are arranged for transmitting digital data from any station $S_i$ to any other station $S_j$, utilizing the common communication path B. Each station $S_i$ comprises addressing means $A_i$ and a data transceiver $D_i$. The addressing means $A_i$ are connected to the communication path B *via* link $SL_i$, whilst the data transceivers $D_i$ are connected to acces port $I_i$ of the addressing means $A_i$.

The addressing means $A_i$, which are shown in greater detail in Figure 2, comprise a clock pulse counter CNTR, a comparator arrangement COMP and an address register ADDR. An input 10 of clock pulse counter CNTR is coupled *via* blocking means BL, still further to be described, to a clock channel which forms part of the communication path B and is represented in the Figure as a separate line $L_3$. The communication path B is used in common by all these stations. To avoid mixing of data the communication path B and, more specifically, the data channel is assigned in turn to one station at a time. The assignment procedure is as follows.

The main station MS (Figure 3) comprises a disableable clock pulse generator CLK connected to the clock channel (line $L_3$). The clock pulses on

line $L_3$ are counted in the counter CNTR (Figure 2) of the addressing means $A_i$. The counting position of counter CNTR is compared with the content of the address register ADDR by applying both signals to a comparator arrangement COMP. The content of the address register is unique for each station. If the instantaneous counting position of counter CNTR corresponds to the content of address register ADDR then the comparator arrangement COMP applies a signal ENAB to an input 11 of an interface arrangement INTF. Thereafter the interface arrangement INTF produces at output 12 a signal which disables the clock pulse generator CLK (Figure 3) in the main station MS via a SEND-channel (a separate line $L_2$ in the Figure) which forms part of the communication path B. In response thereto clock pulses no longer appear on line $L_3$ and consequently counters CNTR all remain in their last counting position.

The station of which the counting position of counter CNTR is equal to the content of the address register ADDR is thereafter—consequently after the ENAB-signal has appeared—given the opportunity to transmit data to any other station. To that end, transceiver $D_i$ which is connected via access port $I_i$ to the addressing means $A_i$, is connected via an output of the interface circuit INTF to a data channel, shown in the Figure as a line $L_1$, which forms part of communication path B. Synchronizing the receiving station is effected in that the interface circuit INTF of the sending station transmits clock pulses to the receiving station via an output 14 and line $L_3$. For that purpose the interface circuit INTF comprises a local clock pulse generator (not shown) an output of which is connected to output 14 of interface circuit INTF. To prevent the clock pulses on line $L_3$ from incrementing the counters CNTR, the blocking means BL block the access of the clock pulses to input 10 of counters CNTR for the same period of time as the clock pulse generator CLK in the main station is disabled via the SEND-signal on line $L_2$. To that end, line $L_2$ is connected together with a line $L_3$ to inputs of the blocking means BL.

At the end of the transmission of data from one station to the other, the transmitting station no longer transmits data and clock signals and the SEND-signal is switched off. Last-mentioned fact results in the disabling of the clock pulse generator CLK in the main station MS being cancelled, and clock pulse generated by the main station appear again on line $L_3$, which pulses are counted again in the counters CNTR which are also enabled again. When it has been found that there is agreement between the new counting position and the content of the address register of another station that station can also access the data channel.

The SEND-signal transmitted by the selected station $S_i$ to the main station MS is—in a preferred embodiment—replied to by the main station MS by a CTS-signal (Clear To Send).

The communication path B further comprises a fourth channel, denoted by line $L_4$ in the drawing, which has for its object to reset the counters CNTR after the desired cycle has completely being passed through. For the case in which 256 stations are connected to the common communication path B and one of the numbers between 1 and 256 is assigned to each station, the counters CNTR are reset after 256 consecutive clock pulses and a new cycle starts.

Although the description of the embodiment is based on a communication path formed by several physically separate conductors $L_1$, $L_2$, $L_3$, $L_4$ it will be obvious that one physical conductor is sufficient if a plurality of channels are created on that line in frequency-division or time-division multiplex.

**Claims**

1. An arrangement for transmitting digital data comprising a main station (MS) and a plurality of stations ($S_1$-$S_n$) which together are connected to a common communication path (B), these stations ($S_1$-$S_n$) comprising a data transmitter, a data receiver and addressing means ($A_i$), which addressing means of each station comprise a clock pulse counter (CNTR) for counting the clock pulses transmitted by a clock pulse generator via a clock channel ($L_3$) which forms part of the communication path (B), which addressing means further comprise an address register (ADDR) and a comparator arrangement (COMP) for comparing the instantaneous counting position of the clock pulse counter (CNTR) with the content of the address register (ADDR), that in case of the presence of equality between this counting position and this content and of the presence of a communication request in the relevant station a switching signal is generated which signal disables the counting process of the clock pulse counter (CNTR) of each station via a SEND-channel ($L_2$) forming part of the communication path (B), the relevant station transmits digital data via a data channel ($L_1$) forming part of the communication path (B) to an addressed station and after the data transmission being ended the disabling of the counting process of the clock pulse counters is being cancelled via the SEND-channel ($L_2$), characterized in that the main station (MS) comprises a clock pulse generator (CLK) which is disableable by the switching signal on the SEND-channel ($L_2$) and that each station comprises a local clock pulse generator, which local clock pulse generator during the data transport transmits clock pulses to the further stations via the clock channel ($L_3$) forming part of the communication part (B), and that each station comprises blocking means (BL) for blocking the counting input of the clock pulse counter (CNTR) for clock pulses transmitted by the transmitting station.

2. An arrangement as claimed in claim 1, characterized in that the clock pulse counter (CNTR) of each station has a rest input, which input is connected to a reset channel ($L_4$) forming part of the communication path (B) and that the main station (MS) comprises reset means connected to the reset channel ($L_4$) for periodically resetting the clock pulse counters.

3. An arrangement as claimed in claim 1 or 2, characterized in that the channels ($L_1$, $L_2$, $L_3$, $L_4$) belonging to the communication path (B) are each realized by a physically separate line.

## Patentansprüche

1. Anordnung zum Übertragen digitaler Daten mit einer Hauptstelle (MS) und einer Anzahl Stellen ($S_1$-$S_n$) die zusammen mit einer gemeinsamen Kommunikationsstrecke (B) verbunden sind, wobei diese Stellen ($S_1$-$S_n$) einen Datensender, einen Datenempfänger und Adressierungsmittel ($A_i$) aufweisen, wobei diese Adressierungsmittel jeder Stelle einen Taktimpulszähler (CNTR) zum Zählen der von einem Taktimpulsgenerator über einen Taktimpulskanal ($L_3$) übertragenen Taktimpulse, wobei dieser Kanal einen Teil der Kommunikationsstrecke (B) bildet, wobei diese Adressierungsmittel weiterhin ein Adressenregister (ADDR) und eine Vergleichsanordnung (COMP) aufweisen zum Vergleichen der Ist-Zählerstellung des Taktimpulszählers (CNTR) mit dem Inhalt des Adressenregisters (ADDR), daß im Falle einer Übereinstimmung zwischen dieser Zählerstellung und diesem Inhalt und im Falle eines Kommunikationsantrags in der betreffenden Stelle ein Schaltsignal erzeugt wird, das den Zählvorgang des Taktimpulszählers (CNTR) jeder Stelle über einen SENDE-Kanal ($L_2$) ausschaltet, wobei dieser kanal einen Teil der Kommunikationsstrecke (B) bildet, wobei die betreffende Stelle über einen Datenkanal ($L_1$) einer adressierten Stelle digitale Daten überträgt, wobei dieser Kanal einen Teil der Kommunikationsstrecke (B) bildet, und wobei nach Beendigung der Datenübertragung der Zählvorgang der Taktimpulszählers über den SENDE-Kanal ($L_2$) eingeschaltet wird, dadurch gekennzeichnet, daß die Hauptstelle (MS) einen Taktimpulsgenerator (CLK) aufweist, der durch das Schaltsignal in dem SENDE-Kanal ($L_2$) ausgeschaltet werden kann und daß jede Stelle einen Ortstaktimpulsgenerator aufweist, der während des Datentransportes über einen Taktimpulskanal ($L_3$) zu den anderen Stellen Taktimpulse überträgt, wobei diese kanal einen Teil des Kommunikationsteils (B) bildet, und daß jede Stelle Sperrmittel (BL) aufweist zum Sperren des Zählereingangs des Taktimpulszählers (CNTR) für Taktimpulse, die von der sendenden Stelle ausgesendet worden sind.

2. Anordnung nach Anspruch 1, dadurch gekennzeichnet, daß der Taktimpulszähler (CNTR) jeder Stelle einen Rückstelleingang aufweist, der mit einem Rückstellkanal ($L_4$) verbunden ist, der einen Teil der Kommunikationsstrecke (B) bildet und daß die Hauptstelle (MS) Rückstellmittel aufweist, die mit dem Rückstellkanal ($L_4$) verbunden sind zum periodischen Rückstellen der Taktimpulszähler.

3. Anordnung nach Anspruch 1 oder 2, dadurch gekennzeichnet, daß die der Kommunikationsstrecke (B) zugeordneten Kanäle ($L_1$, $L_2$, $L_3$, $L_4$) durch je eine einzelne Leitung ausgebildet sind.

## Revendications

1. Système pour la transmission de données numériques comprenant un poste principal (MS) et plusieurs postes ($S_1$-$S_n$) qui ensemble sont connectés à une voie de communication commune (B), ces postes ($S_1$-$S_n$) comprenant un émetteur de données, un récepteur de données et des moyens d'adressage ($A_i$), les moyens d'adressage de chaque poste comprenant un compteur d'impulsions d'horloge (CNTR) destiné à compter les impulsions d'horloge transmises par un générateur d'impulsions d'horloge par l'intermédiaire d'un canal d'horloge ($L_3$) qui fait partie de la voie de communication (B), les moyens d'adressage comprenant, en outre, un registre d'adresses (ADDR) et un dispositif comparateur (COMP) destiné à comparer la position de comptage instantanée du compteur d'impulsions d'horloge (CNTR) avec le contenu du registre d'adresses (ADDR), étant entendu qu'en cas de la présence d'une égalité entre cette position de comptage et ce contenu et de la présence d'une requête de communication dans le poste en question, un signal de commutation est produit, ce signal invalidant le processus de comptage du compteur d'impulsions d'horloge (CNTR) de chaque poste par l'intermédiaire d'un canal d'émission ($L_2$) faisant partie de la voie de communication (B), le poste en question transmet des données numériques par l'intermédiaire d'un canal de données ($L_1$) faisant partie de la voie de communication (B) vers un poste adressé et lorsque la transmission de données est achevée, l'invalidation du processus de comptage des compteurs d'impulsions d'horloge est annulée par l'intermédiaire du canal d'émission ($L_2$), caractérisé en ce que le poste principal (MS) comprend un générateur d'impulsions d'horloge (CLK) qui peut être invalidé par le signal de commutation présent sur le canal d'admission ($L_2$) et que chaque poste comprend un générateur d'impulsions d'horloge local, ce générateur d'impulsions d'horloge local transmettant, pendant le transport des données, des impulsions d'horloge aux autres postes par l'intermédiaire du canal d'horloge ($L_3$) faisant partie de la voie de communication (B), et que chaque poste comprend des moyens de blocage (BL) pour bloquer l'entrée de comptage du compteur d'impulsions d'horloge (CNTR) pour les impulsions d'horloge transmises par le poste émetteur.

2. Système suivant la revendication 1, caractérisé en ce que le compteur d'impulsions d'horloge (CNTR) de chaque poste comporte une entrée de retour à l'état initial qui est connectée à un canal de retour à l'état initial ($L_4$) faisant partie de la voie de communication (B) et que le poste principal (MS) comprend des moyens de retour à l'état initial connectés au canal de retour à l'état initial ($L_4$) pour ramener périodiquement les compteurs d'impulsions d'horloge à l'état initial.

3. Système suivant la revendication 1 ou 2, caractérisé en ce que les canaux (L$_1$, L$_2$, L$_3$, L$_4$) faisant partie de la voie de communication (B) sont chacun réalisés par une ligne physiquement séparée.

FIG.1

FIG.2

FIG.3